# NEUE EUROPÄISCHE PATENTSCHRIFT

(11) **EP 2 932 217 B2**
(45) Veröffentlichungstag und Bekanntmachung des Hinweises auf die Entscheidung über den Einspruch: **11.01.2023**
(45) Hinweis auf die Patenterteilung: 21.06.2017
(21) Anmeldenummer: 13811854.2
(22) Anmeldetag: 13.12.2013
(51) Int. Cl.: G01L 5/22, B62D 15/02, G01D 5/04, G01L 3/10

(54) **VORRICHTUNG MIT EINER DREHMOMENTSENSOREINRICHTUNG UND EINER LENKWINKELSENSOREINRICHTUNG FÜR EIN KRAFTFAHRZEUG, UND KRAFTFAHRZEUG**
DEVICE WITH A TORQUE SENSOR ARRANGEMENT AND A STEERING ANGLE SENSOR ARRANGEMENT FOR A MOTOR VEHICLE, AND MOTOR VEHICLE
DISPOSITIF DOTÉ D'UN ÉQUIPEMENT DÉTECTEUR DE COUPLE DE ROTATION ET D'UN ÉQUIPEMENT DÉTECTEUR D'ANGLE DE BRAQUAGE POUR VÉHICULE AUTOMOBILE, ET VÉHICULE AUTOMOBILE

(30) Priorität: 13.12.2012 DE 102012024383
(43) Veröffentlichungstag der Anmeldung: 21.10.2015
(73) Patentinhaber: Valeo Schalter und Sensoren GmbH, 74321 Bietigheim-Bissingen (DE)
(72) Erfinder: SCHOEPE, Roman, 75433 Maulbronn (DE); THOM, Jens, 71034 Böblingen (DE); FROEHLICH, Ekkehart, 74226 Nordheim (DE); RACHUI, Dirk, 74321 Bietigheim-Bissingen (DE); HADOBAS-ROESSEL, Katalin, 74321 Bietigheim-Bissingen (DE)
(86) Internationale Anmeldenummer: PCT/EP2013/076483
(87) Internationale Veröffentlichungsnummer: WO 2014/090977

(56) Entgegenhaltungen:
- WO-A1-2012/025683
- DE-A1-102010 033 769
- FR-A1- 2 919 385
- Didier Angleviel ET AL: "Development of a Contactless Hall effect torque sensor for Electric Power Steering", SAE 2006 World Congress & Exhibition, 3. April 2006 (2006-04-03), XP055105600, DOI: 10.4271/2006-01-0939 Gefunden im Internet: URL:http://www.movingmagnet.com/medias/dow nload/2006-01-0939.pdf [gefunden am 2014-03-05]

## Beschreibung

Die Erfindung betrifft eine Vorrichtung für ein Kraftfahrzeug, mit einer Drehmomentsensoreinrichtung zur Erfassung eines auf eine Lenkwelle des Kraftfahrzeugs aufgebrachten Drehmoments, und mit einer Lenkwinkelsensoreinrichtung zur Erfassung eines aktuellen Lenkwinkels der Lenkwelle, wobei die Drehmomentsensoreinrichtung einen magnetischen Stator aufweist, der zum Leiten von magnetischem Fluss von einem Magneten hin zu zumindest einem Flussleiter und hierdurch zu zumindest einem Magnetsensor der Drehmomentsensoreinrichtung ausgebildet ist und zwei in axialer Richtung versetzt zueinander angeordnete Statorteile aufweist, welche jeweils ein sich in radialer Richtung erstreckendes, ringförmiges Randelement aufweisen, und wobei die Lenkwinkelsensoreinrichtung zumindest ein Drehübertragungselement mit einem Permanentmagneten und einen Magnetfelddetektor zur Erfassung einer Drehbewegung des Drehübertragungselements aufweist,wobei das zumindest eine Drehübertragungselement mit dem Permanentmagneten in axialer Richtung zwischen den Randelementen angeordnet ist und wobei die Lenkwinkelsensoreinrichtung einen Rotor mit einer Zahnstruktur aufweist und das Drehübertragungselement als Zahnrad ausgebildet ist, das in Eingriff mit der Zahnstruktur des Rotors bringbar ist und mittels welchem eine Drehbewegung des Rotors in eine Drehbewegung des Permanentmagneten übertragbar ist, wobei die Lenkwinkelsensoreinrichtung ein Zahnradgetriebe mit wenigstens zwei Zahnrädern umfasst, deren Zähne in jene des Rotors greifen und auf diese Weise mit dem Rotor gekoppelt sind, wobei in einem Zahnrad ein Permanentmagnet angeordnet ist und die Rotationsachse des Zahnrads parallel zur Drehachse der Lenkwelle ist. Drehmomentsensoreinrichtungen zur Erfassung eines auf eine Lenkwelle eines Kraftfahrzeugs aufgebrachten Drehmoments sind bereits Stand der Technik. Solche Drehmomentsensoreinrichtungen können beispielsweise bei elektrischen Lenksystemen eingesetzt werden. Eine Drehmomentsensoreinrichtung ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht, welche über einen Torsionsstab miteinander verbunden sind. An dem ersten Wellenteil ist ein Magnet- etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter geleitet, welche dann den magnetischen Fluss an einen Magnetsensor - beispielsweise einen Hall-Sensor - abgeben. Der Magnetsensor befindet sich dabei zwischen den beiden Flussleitern, wie dies beispielsweise in den Fig. 7 und 8 des Dokuments US 2004/0194560 A1 gut erkennbar ist.

Eine solche Drehmomentsensoreinrichtung ist außerdem aus dem Dokument DE 10 2007 043 502 A1 bekannt.

Außerdem sind aus dem Stand der Technik auch Lenkwinkelsensoreinrichtungen bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.

Das Interesse richtet sich vorliegend auf Vorrichtungen, bei denen die Drehmomentsensoreinrichtung einerseits sowie die Lenkwinkelsensoreinrichtung andererseits integral als eine gemeinsame Baueinheit ausgebildet sind. Eine solche Vorrichtung mit einem Drehmomentsensor und einem Drehwinkelsensor ist beispielsweise aus dem Dokument DE 10 2010 033 769 A1 bekannt. Eine weitere Vorrichtung mit einem Drehmomentsensor und einem Drehwinkelsensor ist aus dem Dokument WO 2012/025683 A1 bekannt. Bei dieser Vorrichtung ist ein Zahnradgetriebe des Drehwinkelsensors in Form eines Schneckenantriebs in axialer Richtung zwischen den Randelementen der Statorteile des Drehmomentsensors angeordnet. Bei den kombinierten Vorrichtungen, wie sie aus dem Stand der Technik bekannt sind, besteht eine große Herausforderung darin, die Bauhöhe bzw. Ausdehnung der Vorrichtung in axialer Richtung zu minimieren. Insbesondere beanspruchen dabei die Zahnräder (Drehübertragungselemente) der Lenkwinkelsensorik relativ viel Bauraum in axialer Richtung.

Es ist Aufgabe der Erfindung, eine Lösung aufzuzeigen, wie bei einer Vorrichtung der eingangs genannten Gattung die axiale Bauhöhe im Vergleich zum Stand der Technik reduziert werden kann.

Diese Aufgabe wird erfindungsgemäß durch eine Vorrichtung mit den Merkmalen gemäß dem unabhängigen Patentanspruch 1 gelöst. Vorteilhafte Ausführungen der Erfindung sind Gegenstand der abhängigen Patentansprüche, der Beschreibung und der Figuren.

Eine erfindungsgemäße Vorrichtung für ein Kraftfahrzeug umfasst eine Drehmomentsensoreinrichtung, welche zur Erfassung eines auf eine Lenkwelle des Kraftfahrzeugs aufgebrachten Drehmoments ausgebildet ist, sowie eine Lenkwinkelsensoreinrichtung, welche zur Erfassung des aktuellen Lenkwinkels der Lenkwelle ausgebildet ist. Die Drehmomentsensoreinrichtung weist einen magnetischen Stator auf, der zum Leiten von magnetischem Fluss von einem Magneten hin zu zumindest einem Flussleiter und hierdurch zu zumindest einem Magnetsensor ausgebildet ist. Der Stator umfasst zwei in axialer Richtung versetzt zueinander angeordnete Statorteile, welche jeweils ein sich in radialer Richtung erstreckendes, ringförmiges Randelement aufweisen. Die Lenkwinkelsensoreinrichtung umfasst zumindest ein Drehübertragungselement (zum Beispiel ein Zahnrad) mit einem Permanentmagneten und einen Magnetfelddetektor zur Erfassung einer Drehbewegung des Drehübertragungselements. Auf das Drehübertragungselement kann eine Drehbewegung der Lenkwelle übertragen werden. Das zumindest eine Drehübertragungselement mit dem Permanentmagneten sind in axialer Richtung zwischen den Randelementen angeordnet.

Erfindungsgemäß wird somit vorgeschlagen, das wesentliche Bauteil der Lenkwinkelsensoreinrichtung, nämlich das zumindest ein Drehübertragungselement mit seinem Permanentmagneten, nicht axial außerhalb des Stators, sondern in axialer Richtung zwischen den beiden Statorteilen bzw. zwischen den jeweiligen Randelementen anzuordnen. Bei gleichbleibendem axialen Abstand zwischen den Statorteilen reduziert sich somit die axiale Bauhöhe bzw. die axiale Ausdehnung der gesamten Vorrichtung im Vergleich zum Stand der Technik bzw. im Vergleich zu Ausführungsformen, bei denen das Drehübertragungselement und mit seinem Permanentmagneten axial zum Stator versetzt angeordnet ist. Es wird somit insgesamt eine in axialer Richtung sehr kompakte und bauraumsparende integrierte Vorrichtung geschaffen, welche sowohl zur Erfassung des Drehmoments als auch zur Erfassung des Lenkwinkels ausgebildet ist.

Das zumindest eine Drehübertragungselement steht bevorzugt in gegenseitiger Wirkverbindung mit einem Rotor, der mit einem der Wellenteile verbunden wird. Über den Rotor kann dann die Drehbewegung der Lenkwelle auf das in seinem Durchmesser kleinere Drehübertragungselement übertragen werden, und die Drehbewegung des Drehübertragungselements kann mit dem Magnetfelddetektor erfasst und daraus der Lenkwinkel ermittelt werden. Das zumindest eine Drehübertragungselement ist bevorzugt als Zahnrad mit einer umlaufenden Zahnstruktur ausgebildet, welches in Eingriff mit einem Rotor steht, der mit der Lenkwelle drehfest verbunden ist und eine umlaufende Zahnstruktur aufweist. Der Rotor kann an einem Halter angeordnet sein, an welchem auch der magnetische Stator angebracht ist.

Der genannte Magnet, von welchem der magnetische Fluss über den Stator bis hin zum Flussleiter und hierdurch zum Magnetsensor geleitet wird, kann beispielsweise mit einem ersten Wellenteil der Lenkwelle verbunden werden. Der magnetische Stator hingegen kann an dem genannten Halter angeordnet und mit diesem drehfest verbunden werden, der mit einem zweiten Wellenteil der Lenkwelle verbunden werden kann. Die beiden Wellenteile können insbesondere über einen Torsionsstab miteinander gekoppelt sein. Optional kann für den Halter ein Gleitstück eingesetzt werden, welches zum Tragen des zumindest einen Flussleiters ausgebildet ist, wobei dann der Halter mit dem Stator relativ zum Gleitstück und somit relativ zum Flussleiter drehbar angeordnet ist.

In einer Ausführungsform ist vorgesehen, dass das zumindest ein Drehübertragungselement mit seinem Permanentmagneten zumindest bereichsweise in gegenseitiger axialer Überlappung mit den Randelementen der Statorteile angeordnet ist. Dies bedeutet, dass eine Projektion des Drehübertragungselements in axialer Richtung auf die beiden Randelemente existiert. Durch eine solche Anordnung des zumindest einen Drehübertragungselements wird die Ausdehnung der Vorrichtung auch in radialer Richtung reduziert.

Ergänzend oder alternativ kann zumindest ein Drehübertragungselement mit seinem zugeordneten Permanentmagneten in radialer Richtung versetzt zu den Randelementen angeordnet sein. Dies wiederum bedeutet, dass keine axiale Projektion des Drehübertragungselements auf die beiden Randelemente der Statorteile existiert. Diese Ausführungsform hat den Vorteil, dass ein Übersprechen zwischen dem Permanentmagneten und dem Magnetsensor der Drehmomentsensoreinrichtung über den magnetischen Stator verhindert werden kann. Somit werden auch Fehler bei der Erfassung des Drehmoments verhindert.

Die axiale Bauhöhe wird weiterhin dann reduziert, wenn der Magnetfelddetektor an einer Leiterplatte angeordnet ist, welche axial zwischen den beiden Randelementen bzw. axial zwischen den Statorteilen und insbesondere auch parallel zu den Randelementen angeordnet ist.

Also weisen die beiden Statorteile jeweils ein sich in radialer Richtung erstreckendes bzw. radial nach außen hin weisendes, ringförmiges und insbesondere flanschartiges sowie einen axialen Rand des jeweiligen Statorteils bildendes Randelement auf. Diese Randelemente stehen somit senkrecht zur Drehachse der Lenkwelle bzw. der Vorrichtung und parallel zueinander. Von den jeweiligen Randelementen kann jeweils eine Vielzahl von in Umfangsrichtung verteilt angeordneten Zahnelementen in axialer Richtung abstehen. Die Zahnelemente des einen Statorteils sind dann mit den Zahnelementen des anderen Statorteils abwechselnd in Umfangsrichtung verteilt angeordnet, sodass die Zahnelemente des einen Statorteils sich in jeweilige Zwischenräume zwischen den Zahnelementen des anderen Statorteils axial hinein erstrecken. Die flanschartigen Randelemente überlappen sich dabei vorzugsweise gegenseitig in axialer Richtung, und die jeweiligen Zahnelemente zeigen bevorzugt axial in entgegengesetzte Richtungen. Die ringförmigen Randelemente dienen dabei zum Übertragen des magnetischen Flusses an den jeweiligen Flussleiter. Ein plattenförmiger Empfangsbereich des Flussleiters wird hierzu bevorzugt in einem sehr geringen Abstand zum flanschartigen Randelement des jeweiligen Statorteils angeordnet. Die Zahnelemente hingegen dienen zum Empfangen des magnetischen Flusses von dem Magneten, der an einem der Wellenteile angebracht ist.

In einer Ausführungsform ist der Permanentmagnet des Drehübertragungselements in axialer Richtung außermittig zwischen den beiden Randelementen angeordnet. Bevorzugt ist dabei der zumindest eine Magnetsensor der Drehmomentsensoreinrichtung axial mittig zwischen den beiden Statorteilen bzw. den jeweiligen Randelementen angeordnet. Dies bedeutet, dass der zumindest eine Magnetsensor im gleichen axialen Abstand von den beiden Randelementen liegt. Der Permanentmagnet des Drehübertragungselements ist bei dieser Ausführungsform vorzugsweise dazu ausgebildet bzw. derart oberflächenmagnetisiert, dass er an den jeweiligen Randelementen der Statorteile ein Magnetfeld mit gleicher Feldstärke bereitstellt. Das Magnetfeld ist somit auf der jeweiligen axialen Höhe der beiden Randelemente gleich groß, sodass sich diese Magnetfelder des Permanentmagneten an den beiderseitigen Randelementen gegenseitig aufheben. Somit wird eine Beeinflussung des magnetischen Flusses verhindert, der über den Stator hin zum Magnetsensor geleitet wird. Fehler bei der Erfassung des Drehmoments können somit verhindert werden.

Gemäß einer alternativen Ausführungsform kann der Magnet des Drehübertragungselements axial mittig zwischen den beiden Statorteilen bzw. den jeweiligen Randelementen angeordnet sein, sodass der Magnetsensor der Drehmomentsensoreinrichtung und der Magnetfelddetektor der Lenkwinkelsensoreinrichtung axial außermittig liegen. Bei dieser Ausführungsform werden die beiden Flussleiter bevorzugt asymmetrisch bezüglich einer Symmetrieebene bzw. Mittelebene zwischen den beiderseitigen Randelementen der Statorteile angeordnet. Der eine Flussleiter kann vollständig axial innerhalb des Stators und somit axial zwischen den Randelementen liegen, während der andere Flussleiter zumindest mit seinem Empfangsbereich axial außerhalb des Stators bzw. axial versetzt dazu angeordnet sein kann. Eine solche Anordnung des Permanentmagneten axial in der Mitte zwischen den Randelementen hat den Vorteil, dass die Feldstärke des Magnetfeldes an den beiden Randelementen auch bei einem "normalen" Permanentmagneten ohne eine spezielle Oberflächenmagnetisierung gleich ist, sodass kein Übersprechen zwischen den beiden Sensorarten stattfindet.

Im Allgemeinen können die beiden Flussleiter gleiche Bauteile sein oder sie können auch unterschiedlich ausgebildet sein.

Optional kann auch eine Abschirmung für Magnetfelder axial zwischen dem Permanentmagneten des Drehübertragungselements einerseits und zumindest einem der Randelemente andererseits angeordnet sein. Eine solche Abschirmung kann insbesondere in Form eines Abschirmungsbleches bereitgestellt werden, das sich parallel zur Leiterplatte erstreckt. Die Abschirmung hat den Vorteil, dass ein Übersprechen zwischen den beiden Sensorteilen über den Stator wirkungsvoll minimiert werden kann. Sie kann gegebenenfalls auch durch eine Metallisierung der Leiterplatte selbst gebildet sein oder ein zur Leiterplatte separates Bauteil darstellen.

Wie bereits ausgeführt, umfasst die Lenkwinkelsensoreinrichtung bevorzugt einen Rotor mit einer Zahnstruktur. Das Drehübertragungselement kann als Zahnrad ausgebildet sein, das in Eingriff mit der Zahnstruktur des Rotors bringbar ist und mittels welchem eine Drehbewegung des Rotors und somit der Lenkwelle in eine Drehbewegung des Permanentmagneten übertragen wird. Vorzugsweise ist der Rotor mit seiner umlaufenden Zahnstruktur direkt an den genannten Halter angespritzt, an welchem der Stator angeordnet ist und welcher mit einem der Wellenteile der Lenkwelle verbunden wird. Dadurch entfällt ein zusätzliches Zahnrad als eigenständiges Teil, wie auch der dazugehörige Fügeprozess des Rotors auf den Halter. Durch diese einstückige Ausgestaltung des Rotors mit dem Halter ergibt sich außerdem ein verbesserter Rundlauf der Zahnelemente.

In einer bevorzugten Ausführungsform ist der zumindest eine Magnetsensor der Drehmomentsensoreinrichtung als SMD-Bauelement (Surface-Mounted-Device) ausgebildet, welches an einer Leiterplatte angeordnet ist, nämlich insbesondere einer für die Drehmomentsensoreinrichtung und die Lenkwinkeleinrichtung gemeinsamen Leiterplatte, an welcher auch der Magnetfelddetektor der Lenkwinkelsensoreinrichtung angebracht ist. Der zumindest eine Flussleiter weist dabei bevorzugt eine Lasche auf, die in gegenseitiger Überlappung mit dem Magnetsensor angeordnet ist. Während im Stand der Technik aufgrund der Ausgestaltung des Flussleiters der Magnetsensor als THT-Bauelement (Throuh-Hole-Technology) ausgebildet werden muss, wird bei dieser Ausführungsform vorgeschlagen, den Magnetsensor als SMD-Bauelement auszubilden und den Flussleiter derart auszugestalten, dass er eine, insbesondere sich in radialer Richtung erstreckende, Lasche aufweist, die in gegenseitiger Überdeckung mit dem Magnetsensor angeordnet ist. Dadurch entfällt die Bestückung und Lötung von bedrahteten Bauelementen mit den damit verbundenen Nachteilen. Alle Bauelemente können als SMD-Bauelemente auf der Leiterplatte in einem gemeinsamen Fertigungsschritt montiert werden, sodass sich insgesamt der Fertigungsaufwand im Vergleich zum Stand der Technik deutlich reduziert. Weil SMD-Bauelemente auch besonders flach ausgeführt werden können, kann die Größe der Vorrichtung in Richtung senkrecht zur Leiterplatte, insbesondere in axialer Richtung, weiterhin reduziert werden. Insbesondere ergibt sich eine deutliche Reduzierung der axialen Bauhöhe, wenn die Leiterplatte senkrecht zur axialen Richtung angeordnet ist bzw. in einer radialen Ebene liegt. Bevorzugt ist die Leiterplatte dabei axial zwischen den beiden Randelementen der Statorteile angeordnet.

Um die axiale Bauhöhe weiterhin zu reduzieren, ist in einer Ausführungsform vorgesehen, dass die Lasche des Flussleiters eine axiale oder eine radiale bzw. in radialer Richtung weisende Lasche ist, die in gegenseitiger axialer Überdeckung mit dem Magnetsensor angeordnet ist.

Die Lasche kann also eine radiale Lasche sein, die in radialer Richtung zeigt. Alternativ kann jedoch auch vorgesehen sein, dass die Lasche im Wesentlichen in axialer Richtung weist und somit axial orientiert ist, ohne dass sie einen speziellen radialen Abschnitt aufweist. Auch hier ist dann eine gegenseitige Überlappung zwischen der Lasche und dem Magnetsensor gegeben, nämlich insbesondere in axialer Richtung oder alternativ in radialer Richtung, abhängig von der Orientierung der Leiterplatte.

Bevorzugt weist der zumindest eine Flussleiter einen in gegenseitiger axialer Überlappung mit dem Stator angeordneten, plattenförmigen Empfangsbereich zum Empfangen des magnetischen Flusses von dem Stator auf. Dann kann die sich parallel zum Empfangsbereich erstreckende Lasche in axialer Richtung versetzt zum Empfangsbereich angeordnet sein. Dies bedeutet, dass die radiale Lasche des Flussleiters über einen Steg bzw. ein Brückenelement mit dem Empfangsbereich verbunden ist, wobei der Steg gewinkelt, insbesondere senkrecht, sowohl zum Empfangsbereich als auch zur Lasche angeordnet ist. Der Flussleiter ist dabei vorzugsweise insgesamt einstückig ausgebildet, sodass der Empfangsbereich einerseits sowie der Steg und die radiale Lasche andererseits einstückig miteinander ausgebildet sind. Dadurch, dass die radiale Lasche in axialer Richtung versetzt zum Empfangsbereich des Flussleiters angeordnet ist, kann einerseits der Empfangsbereich in einem sehr geringen Abstand zum Stator und andererseits die Lasche in einem sehr geringen Abstand zum Magnetsensor angeordnet werden, sodass eine zuverlässige Übertragung des magnetischen Flusses vom Stator hin zum Magnetsensor gewährleistet ist.

Der zumindest eine Flussleiter kann - ähnlich wie der Stator - aus einem magnetischen, z. B. weichmagnetischen, Material gebildet sein.

Die Drehmomentsensoreinrichtung kann auch zwei Flussleiter mit jeweils zumindest einer genannten Lasche aufweisen, die auf einander gegenüberliegenden Seiten der Leiterplatte angeordnet sind. Die jeweiligen Laschen können in gegenseitiger, insbesondere axialer, Überdeckung mit dem Magnetsensor angeordnet sein. Somit ist der Magnetsensor quasi als Sandwich-Element zwischen der Lasche des einen Flussleiters einerseits und der Lasche des anderen Flussleiters andererseits angeordnet und überlappt die beiden Laschen insbesondere in axialer Richtung. Somit kann die Übertragung des magnetischen Flusses über die beiden separaten Statorteile sowie über die jeweiligen Flussleiter hin zu dem Magnetsensor ermöglich werden, sodass auch eine zuverlässige Erfassung des Drehmoments gewährleistet ist.

Um eine wirkungsvolle Flussübertragung auf den Magnetsensor von demjenigen Flussleiter zu ermöglichen, der sich auf der Rückseite der Leiterplatte befindet, kann die Leiterplatte eine unter dem Magnetsensor ausgebildete Aussparung für die Lasche des Flussleiters aufweisen. Die Aussparung ist bevorzugt ein Durchgangsloch in der Leiterplatte. Die Lasche des genannten Flussleiters kann sich dann in die Aussparung der Leiterplatte, insbesondere axial, hinein erstrecken. Auf diese Art und Weise kann der axiale Abstand zwischen dem Magnetsensor bzw. seiner Rückseite einerseits und der Lasche des Flussleiters andererseits minimiert und die Übertragungswirkung optimiert werden. Außerdem verringert sich somit zusätzlich noch die axiale Bauhöhe.

Alternativ zu der Aussparung kann die Leiterplatte auch in Form einer dünnen Folie als so genannte Flex-Leiterplatte ausgebildet sein. Diese weist dann vorzugsweise eine Dicke von weniger als 0,2 mm auf, sodass der magnetische Fluss durch diese Folie hindurch übertragen werden kann, ohne dass speziell eine Durchgangsöffnung bereitgestellt werden muss. Auch somit kann eine wirkungsvolle Flussübertragung auf den Magnetsensor von demjenigen Flussleiter ermöglicht werden, der sich auf der Rückseite der Leiterplatte befindet.

Der magnetische Fluss kann also mit insgesamt zwei Flussleitern an den jeweiligen Randelementen des Stators abgegriffen und über die jeweiligen schmalen Laschen zum Magnetsensor geleitet und dort konzentriert werden. Die Laschen reichen dabei bevorzugt bis dicht an die Ober- und Unterseite des Magnetsensors heran, um einen sehr engen Luftspalt zu erhalten. Dazu kann in der Leiterplatte unterhalb des Magnetsensors die genannte Aussparung vorgesehen sein, welche vorzugsweise als Durchgangsöffnung in der Leiterplatte ausgebildet ist.

Die Drehmomentsensoreinrichtung kann auch zwei als SMD-Bauelemente ausgebildete Magnetsensoren jeweils zum Erfassen des magnetischen Flusses aufweisen, und der zumindest eine Flussleiter kann zwei, insbesondere in einer gemeinsamen radialen Ebene angeordnete, vorzugsweise radiale, Laschen aufweisen, die jeweils in gegenseitiger, insbesondere axialer, Überlappung mit einem der Magnetsensoren angeordnet sind. Durch Vorsehen von zwei separaten Magnetsensoren sowie zwei Laschen zum Leiten des magnetischen Flusses zu den jeweiligen Magnetsensoren kann eine redundante Erfassung des magnetischen Flusses und somit eine redundante Bestimmung des Drehmoments an der Lenkwelle ermöglicht werden, so dass Fehler bei der Bestimmung des Drehmoments aufgrund der gegebenen Redundanz ausgeschlossen werden können.

Zumindest ein Magnetsensor der Drehmomentsensoreinrichtung kann als dualer Sensor mit zwei integrierten Sensorelementen ausgebildet sein, welche in das SMD-Bauelement integriert sind und den magnetischen Fluss separat erfassen können. Mit einem solchen dualen Magnetsensor kann eine zusätzliche Redundanz im Hinblick auf die Erfassung des Drehmoments ermöglicht werden und/oder die Drehmomentsensoreinrichtung kann mit lediglich einem einzigen Magnetsensor auskommen, welcher zwei integrierte Sensorelemente beinhaltet.

Sind insgesamt zwei separate Magnetsensoren als separate SMD-Bauelemente vorgesehen, so kann zumindest einer dieser Magnetsensoren als dualer Sensor mit zwei Sensorelementen ausgebildet sein. Optional können sogar beide Magnetsensoren als duale Sensoren ausgebildet sein.

Umfasst die Drehmomentsensoreinrichtung ausschließlich einen Magnetsensor, so kann dieser als dualer Sensor mit zwei Sensorelementen zur separaten Erfassung des magnetischen Flusses ausgebildet sein.

Vorzugsweise entspricht die Anzahl der eingesetzten Magnetsensoren der Anzahl der Laschen, welche bei einem einzelnen Flussleiter eingesetzt werden. Jedem Magnetsensor ist somit jeweils eine Lasche des zumindest einen Flussleiters zugeordnet.

Die Erfindung betrifft außerdem ein Kraftfahrzeug mit einer erfindungsgemäßen Vorrichtung.

Die mit Bezug auf die erfindungsgemäße Vorrichtung vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand eines bevorzugten Ausführungsbeispiels, wie auch unter Bezugnahme auf die beigefügten Zeichnungen näher erläutert.

Es zeigen:
- Fig. 1: in schematischer Explosionsdarstellung eine integrierte Vorrichtung für ein Kraftfahrzeug mit einer Drehmomentsensoreinrichtung und einer Lenkwinkelsensoreinrichtung;
- Fig. 2: in vergrößerter Darstellung einen Bereich der Vorrichtung gemäß Fig. 1;
- Fig. 3: in vergrößerter Darstellung einen weiteren Bereich der Vorrichtung gemäß Fig. 1;
- Fig. 4 und 5: unterschiedliche Ausführungsformen eines Flussleiters;
- Fig. 6: in schematischer und perspektivischer Darstellung die Vorrichtung gemäß Fig. 1 in zusammengebautem Zustand;
- Fig. 7: in schematischer und teilweiser Schnittdarstellung eine erste axiale Anordnung von elektronischen Bauelementen der Vorrichtung; und
- Fig. 8 und 9: in schematischer und teilweiser Schnittdarstellung eine zweite axiale Anordnung von elektronischen Bauelementen der Vorrichtung, wobei Schnittansichten einer Leiterplatte entlang zweier verschiedener Schnittebenen gezeigt sind;
- Fig. 10: in schematischer und teilweiser Schnittdarstellung eine weitere Anordnung von elektronischen Bauelementen der Vorrichtung, wobei als Leiterplatte eine Flex-Platine verwendet wird;
- Fig. 11: in schematischer und teilweiser Schnittdarstellung eine weitere Anordnung von elektronischen Bauelementen der Vorrichtung, wobei unterschiedliche Flussleiter verwendet werden;
- Fig. 12: in schematischer und teilweiser Schnittdarstellung eine weitere Anordnung von elektronischen Bauelementen der Vorrichtung, wobei sich die Leiterplatte parallel zur axialen Richtung erstreckt; und
- Fig. 13: in schematischer Darstellung beispielhafte Flussleiter.

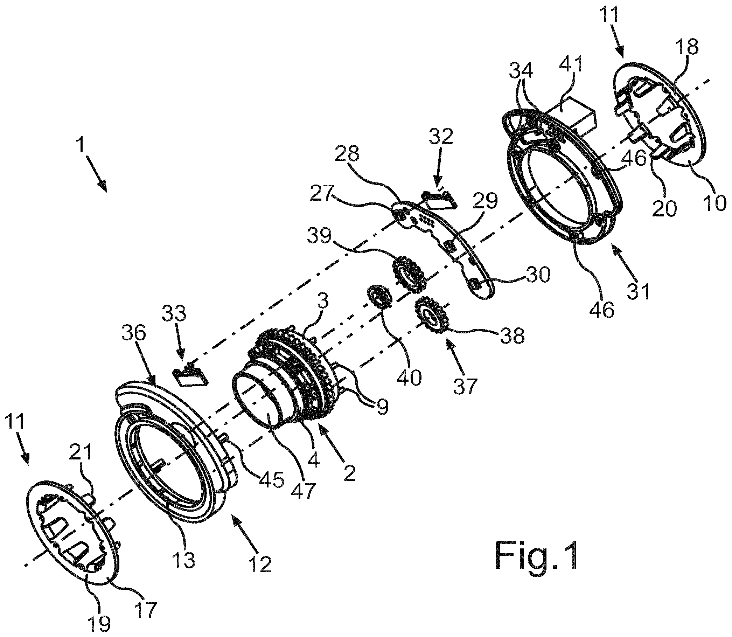

Eine in Fig. 1 dargestellte und insgesamt mit 1 bezeichnete Vorrichtung gemäß einer Ausführungsform der Erfindung umfasst sowohl eine Drehmomentsensoreinrichtung als auch eine Lenkwinkelsensoreinrichtung. Die Drehmomentsensoreinrichtung dient zum Messen eines auf eine Lenkwelle eines Kraftfahrzeugs aufgebrachten Drehmoments. Die Lenkwinkelsensoreinrichtung dient zur Erfassung des aktuellen Lenkwinkels der Lenkwelle. Die Vorrichtung 1 ist als eine integrale Baueinheit ausgebildet, so dass eine integrale Sensorvorrichtung geschaffen wird, welche sowohl zur Erfassung des Drehmoments als auch zum Messen des Lenkwinkels ausgebildet ist.

Die Lenkwelle des Fahrzeugs beinhaltet zwei Wellenteile, welche über einen in den Fig. nicht dargestellten Torsionsstab miteinander verbunden sind. An einem der Wellenteile wird ein Halter 2 drehfest angebracht, während an dem anderen Wellenteil ein in den Fig. nicht dargestellter Magnet - nämlich Permanentmagnet beispielsweise in Form eines Ringmagneten - drehfest gehalten ist. Der Halter 2 kann ein einstückig ausgebildetes Kunststoffteil und/oder ein Gussbauteil sein. Optional kann der Halter 2 auch mit einer Hülse 47, zum Beispiel aus Metall, oder aber anderen Befestigungselementen wie Laschen, Haken, Clipsen und dergleichen versehen sein, um den Halter 2 an dem zugeordneten Wellenteil zu befestigen.

Die Komponenten der Drehmomentsensoreinrichtung sind im Wesentlichen: der genannte Permanentmagnet, ein magnetischer Stator 11 mit zwei gleichen Statorteilen 10, 17, zwei Flussleiter 32, 33 sowie ein Magnetsensor 27, der an einer Leiterplatte 28 platziert ist. Zur Lenkwinkelsensoreinrichtung gehören hingegen: Zwei Magnetfelddetektoren bzw. Magnetsensoren 29, 30, ein Getriebe 37 mit Drehübertragungselementen, welche als Zahnräder 38, 39, 40 ausgebildet sind, sowie ein Rotor 15, der an den Halter 2 angespritzt ist.

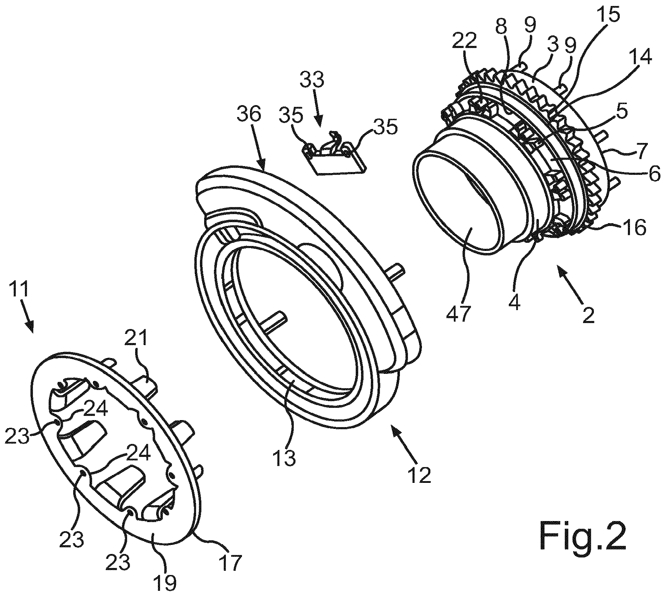

Der Halter 2 umfasst, wie insbesondere aus Fig. 2 hervorgeht, zwei axial nebeneinander angeordnete zylindrische Bereiche, nämlich einerseits einen ersten zylindrischen axialen Bereich 3 sowie einen in axialer Richtung versetzt angeordneten sowie konzentrisch zum ersten Bereich 3 liegenden und einen etwas geringeren Durchmesser aufweisenden zweiten axialen Bereich 4. Der erste axiale Bereich 3 ist über eine Vielzahl von in Umfangsrichtung verteilt angeordneten, strebenförmigen bzw. speichenförmigen Verbindungselementen 5 mit dem zweiten axialen Bereich 4 verbunden. Zwischen den Verbindungselementen 5 sind radiale Aussparungen 6 ausgebildet, welche Durchgangsöffnungen sind.

Der erste axiale Bereich 3 hat zwei axiale Randkanten, nämlich einerseits eine erste äußere Randkante 7 sowie andererseits eine zweite axiale Randkante 8, welche dem zweiten axialen Bereich 4 zugewandt ist.

An der ersten axialen Randkante 7 sind eine Vielzahl von axialen Stiften bzw. Bolzen 9 ausgebildet, welche als axiale Fortsätze in axialer Richtung parallel zueinander von der Kante 7 abstehen. Über diese Stifte 9 wird der Halter 2 mit einem ersten Statorteil 10 des insgesamt mit 11 bezeichneten Stators verbunden.

Zur Vorrichtung 1 gehört außerdem ein Gehäuse 12, welches zusätzlich auch die Funktion eines Gleitstücks aufweist. Das Gehäuse 12 hat eine innere Hülse 13, welche ringförmig umlaufend ausgebildet ist und in welche der erste axiale Bereich 3 des Halters 2 aufgenommen wird, so dass der äußere Umfang des ersten Bereiches 3 des Halters 2 an einem inneren Umfang der Hülse 13 gleiten kann. Dabei wird der erste axiale Bereich 3 des Halters 2 in die Hülse 13 bis hin zu einem Flansch 14 des Halters 2 eingesteckt, welcher durch einen Rotor 15 mit einer Zahnstruktur 16 gebildet ist. Der Rotor 15 mit der Zahnstruktur 16 ist dabei an dem ersten axialen Bereich 3 angespritzt.

Neben dem ersten Statorteil 10 weist der Stator 11 zusätzlich auch ein zweites Statorteil 17 auf. Jedes Statorteil 10, 17 ist jeweils einstückig ausgebildet und weist ein ringförmiges, flanschartiges und sich in radialer Richtung nach außen erstreckendes Randelement 18 bzw. 19 auf, wie auch eine Vielzahl von Zahnelementen 20 bzw. 21. Die Zahnelemente 20, 21 stehen von dem jeweiligen Randelement 18, 19 in axialer Richtung ab, und zwar in Richtung zum ersten axialen Bereich 3 des Halters 2 hin. Die Zahnelemente 20, 21 erstrecken sich somit in axialer Richtung etwa parallel zu einer Drehachse der Lenkwelle. Die beiden Statorteile 10, 17 sind dabei gleich ausgebildet, so dass auch die Anzahl der Zahnelemente 20 des ersten Statorteils 10 gleich der Anzahl der Zahnelemente 21 des zweiten Statorteils 17 ist.

Zur Befestigung des Stators 11 an dem Halter 2 wird einerseits das Statorteil 17 auf den zweiten axialen Bereich 4 des Halters 2 aufgesteckt, so dass die Zahnelemente 21 durch die Aussparungen 6 zwischen den Verbindungselementen 5 axial hindurch gesteckt und an einem Innenumfang des ersten axialen Bereiches 3 des Halters 2 abgestützt werden. Nach dem Aufstecken des Statorteils 17 auf den zweiten Bereich 4 des Halters 2 sind die Zahnelemente 21 im Inneren des ersten axialen Bereiches 3 des Halters 2 angeordnet, so dass lediglich das Randelement 19 radial nach außen hin absteht und an der axialen Randkante 8 des ersten axialen Bereichs 3 des Halters 2 axial abgestützt ist.

Beim Aufstecken des Statorteils 17 auf den zweiten axialen Bereich 4 des Halters 2 werden an den Verbindungselementen 5 im Bereich der Randkante 8 ausgebildete Stifte 22 des ersten axialen Bereiches 3 in korrespondierende Durchgangsöffnungen 23 aufgenommen und durch diese Durchgangsöffnungen 23 hindurch gesteckt, welche in dem Randelement 19 des Statorteils 17 ausgebildet sind. Diese Durchgangsöffnungen 23 sind in jeweiligen Laschen 24 ausgebildet, welche in Richtung zum Zentrum des Stators 11 radial nach innen hin abstehen bzw. zum Zentrum hin zeigen. Zwischen jeweils zwei benachbarten Zahnelementen 21 ist dabei jeweils eine solche Lasche 24 mit einer Durchgangsöffnung 23 vorgesehen.

Nach Aufstecken des Statorteils 17 auf den zweiten axialen Bereich 4 des Halters 2 und somit nach Aufnehmen der Stifte 22 in die Durchgangsöffnungen 23 können die freien Enden der Stifte 22 umgeformt und somit zu Nietköpfen verarbeitet werden, um einen sicheren Sitz des Statorteils 17 an dem Halter 2 zu gewährleisten.

Das andere Statorteil 10 wird an dem Halter 2 derart befestigt, dass die Zahnelemente 20 in das Innere des ersten axialen Bereiches 3 des Halters 2 von der dem Statorteil 17 gegenüberliegenden axialen Stirnseite des Halters 2 bzw. von der Seite der Randkante 7 eingesteckt werden. Dabei gleiten die Zahnelemente 20 an dem Innenumfang des zylindrischen Bereiches 3. Im zusammengebauten Zustand befinden sich die Zahnelemente 20 jeweils zwischen zwei benachbarten Zahnelementen 21 des anderen Statorteils 17 und liegen an dem Innenumfang des Bereichs 3 an. Auch das Statorteil 10 weist eine Vielzahl von Laschen 25 auf, in denen jeweils eine Durchgangsöffnung 26 ausgebildet ist. Durch diese Durchgangsöffnungen 26 werden die korrespondierenden Stifte 9 hindurch gesteckt, die an der Randkante 7 des Halters 2 ausgebildet sind. Die freien Enden dieser Stifte 9 werden zu Nietköpfen umgeformt und somit eine sichere Befestigung des Statorteils am Halter 2 gewährleistet.

Grundsätzlich können die beiden Statorteile 10, 17 auf verschiedenste Arten an dem Halter 2 fixiert werden. Die Kombination aus Stiften 9 bzw. 22 und Durchgangsöffnungen 26 bzw. 23 stellt lediglich eine beispielhafte Ausführungsform dar. Es ist beispielsweise auch möglich, die Statorteile 10, 17 an dem Halter 2 über Halteringe zu fixieren, welche per Laserschweißen oder aber Ultraschallschweißen an dem Halter 2 fixiert werden.

Die Drehmomentsensoreinrichtung weist einen Magnetsensor 27 auf, welcher auf einer Leiterplatte 28 angeordnet ist. Der Magnetsensor 27 ist als elektronisches SMD-Bauelement ausgebildet, welches mittels lötfähiger Anschlussflächen direkt auf die Leiterplatte 28 gelötet wird. Die entsprechende Technik wird als "Oberflächenmontage" (Surface-Mounting-Technology) bezeichnet. Die Leiterplatte 28 ist eine gemeinsame Platine sowohl für den Magnetsensor 27 der Drehmomentsensoreinrichtung als auch für Bauelemente der Lenkwinkelsensoreinrichtung. An der Leiterplatte 28 sind nämlich auch Magnetfelddetektoren bzw. Sensorelemente 29, 30 der Lenkwinkelsensoreinrichtung angeordnet, welche ebenfalls als SMD-Bauelemente ausgebildet sind.

Zum Verschließen des Gehäuses 12 umfasst die Vorrichtung 1 einen Deckel 31.

Die Vorrichtung 1 umfasst außerdem im Ausführungsbeispiel zwei Flussleiter 32, 33, welche zur Drehmomentsensoreinrichtung gehören. Die beiden Flussleiter 32, 33 werden einerseits an dem Deckel 31 und andererseits am Gehäuse 12 befestigt. Der Deckel 31 weist dazu zwei Stifte 34 auf, welche durch korrespondierende Durchgangsöffnungen 35 im Flussleiter 32 hindurch gesteckt werden. Entsprechende Stifte sind auch auf der Seite des Gehäuses 12 für den zweiten Flussleiter 33 bereitgestellt. Durch Umformung der Stifte 34 können Nietköpfe gebildet werden, welche eine wirkungsvolle und betriebssichere Fixierung der Flussleiter 32, 33 an dem Deckel 31 bzw. dem Gehäuse 12 gewährleisten.

Das Gehäuse 12 weist eine Aufnahme 36 auf, in welche sowohl die Leiterplatte 28 mit den Bauelementen 27, 29, 30 als auch ein Zahnradgetriebe 37 der Lenkwinkelsensoreinrichtung aufgenommen werden können. Das Zahnradgetriebe 37 hat zwei Zahnräder 38, 39, deren Zähne in jene des Rotors 15 greifen und auf diese Weise mit dem Rotor 15 bzw. dem Halter 2 drehbar gekoppelt sind. Im Zahnrad 38 ist ein Permanentmagnet angeordnet. Die Rotationsachse des Zahnrads 38 ist dabei parallel zur Drehachse der Lenkwelle. Ein zweites Teilsensorsystem der Lenkwinkelsensoreinrichtung umfasst das Zahnrad 39, welches als Zwischenzahnrad mit einem Antriebszahnrad bzw. Ritzel 40 drehbar gekoppelt ist. Das Antriebszahnrad 40 enthält wiederum einen Permanentmagneten. Die Zahnräder 38, 39, 40 werden in der Aufnahme 36 des Gehäuses 12 untergebracht und darin drehbar gelagert. In der Aufnahme 36 ist eine Innenverzahnung vorhanden, an der das Antriebszahnrad 40 entlang einer Zykloide abrollen kann. Die Bohrung des Zahnrads 39 ist hierzu exzentrisch ausgebildet. Die Leiterplatte 28 und der Deckel 31 sind gegenstückig zur Aufnahme 36 ausgebildet und schließen das Getriebe 37 von oben her ein. Die Magnetfelddetektoren 29, 30 sind im Ausführungsbeispiel Hall-Sensoren. Die Magnetfelddetektoren 29, 30 kommen gegenüber den Permanentmagneten der Zahnräder 40 bzw. 38 zu liegen. Sie stehen dabei senkrecht zur Rotationsachse der Zahnräder 38, 39. Der Magnetfelddetektor 29 kommt auf der Drehachse des Zahnrads 39 zu liegen, während der Magnetfelddetektor 30 senkrecht zur Drehachse des Zahnrads 38 sitzt.

In typischen Fahrzeuglenkungen wird ein Bereich von fünf bis sieben vollen Umdrehungen der Lenkwelle eindeutig erfasst. Um auch bei mehr als einer vollen Umdrehung der Lenkwelle den absoluten Drehwinkel eindeutig zu bestimmen, werden zwei Baugruppen eingesetzt. Die eine Baugruppe bildet einen Umdrehungssensor (Revolution Sensor) und umfasst die Zahnräder 39, 40 und den Magnetfelddetektor 29. Es wird beispielsweise ein Übersetzungsverhältnis von Rotor 15 zu Zahnrad 40 von 6:1 gewählt. Die andere Baugruppe dient der Feinbestimmung des Drehwinkels (Angle Sensor) und umfasst im Wesentlichen das Zahnrad 38 mit seinem Permanentmagneten sowie den Magnetfelddetektor 30. Für das Übersetzungsverhältnis von Rotor 15 zu Zahnrad 38 wird beispielsweise ein Wert von 1:3 gewählt. Aus den beiden mit den Magnetfelddetektoren 29, 30 gemessenen Zahnradwinkeln kann dann in bekannter Weise über das Nonius-Prinzip der Drehwinkel der Lenkwelle unmittelbar berechnet werden. Geeignete Berechnungsverfahren hierfür sind aus dem Stand der Technik bekannt und beispielsweise in der DE 195 06 938 A1 und DE 199 62 241 A1 offenbart.

Alternativ kann auch ein "kleiner Nonius" für das Übersetzungsverhältnis gewählt werden, um den aktuellen Lenkwinkel bestimmen zu können. Es kann dabei auf das Zahnrad 40 verzichtet werden, und die beiden Zahnräder 38, 39 können mit jeweils einem Magneten versehen werden. Die Zahnräder 38, 39 weisen dann unterschiedliche Anzahl von Zähnen auf, sodass sich auf den vollen Lenkwinkelbereich von 5 bis 7 Umdrehungen der Lenksäule beispielsweise das Zahnrad 39 einmal öfter als das Zahnrad 38 dreht. Auch somit kann auf den tatsächlichen Lenkwinkel zurückgeschlossen werden.

In den Deckel 31 kann auch ein Stecker 41 integriert sein, über welchen die Bauelemente 27, 29, 30 an ein externes Steuergerät elektrisch angeschlossen werden können. Über den Stecker 41 wird also eine elektrische Verbindung zwischen der Vorrichtung 1 einerseits und einem Steuergerät andererseits bereitgestellt.

Werden die Flussleiter 32, 33 an dem Deckel 31 bzw. dem Gehäuse 12 befestigt, so erstrecken sich die Flussleiter 32, 33 in radialer Richtung und somit parallel zu den Randelementen 18, 19. Die beiden Flussleiter 32, 33 sind dabei auf einander gegenüberliegenden axialen Seiten der Leiterplatte 28 angeordnet, wobei zumindest einer der Flussleiter 32, 33 auch axial zwischen den Randelementen 18, 19 liegt. Der Flussleiter 32 liegt dabei in einem geringen Abstand zum Randelement 18, während der zweite Flussleiter 33 in einem geringen Abstand zum Randelement 19 angeordnet ist.

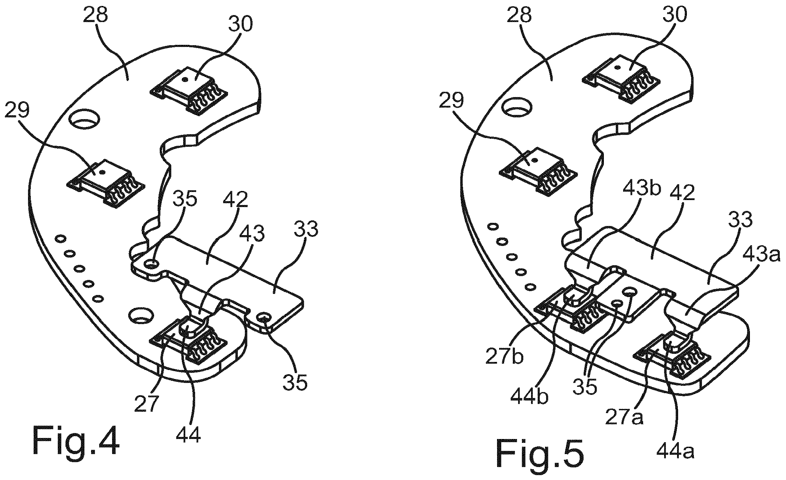

Die Ausgestaltung der Flussleiter 32, 33 wird nun Bezug nehmend auf die Fig. 4 und 5 näher erläutert. In Fig. 4 ist dabei der Flussleiter 33 gemäß einer Ausführungsform dargestellt, wobei der Flussleiter 32 entsprechend identisch aufgebaut ist. Der Flussleiter 33 hat einen plattenförmigen und im Wesentlichen rechteckförmigen Empfangsbereich 42, in welchem die Durchgangsöffnungen 35 ausgebildet sind. In einem rechten Winkel steht von dem Empfangsbereich 42 ein Steg 43 ab, von welchem wiederum ebenfalls unter einem rechten Winkel eine radiale Lasche 44 absteht, die sich parallel zum Empfangsbereich 42 erstreckt. Die Lasche 44 ist deutlich kleiner als der Empfangsbereich 42 und ebenfalls plattenförmig ausgebildet. Sie ist in axialer Richtung versetzt zum Empfangsbereich 42 angeordnet. Die Lasche 44 ist in gegenseitiger axialer Überlappung mit dem Magnetsensor 27 der Drehmomentsensoreinrichtung und dabei in einem sehr geringen axialen Abstand zum Magnetsensor 27 angeordnet.

Auch der erste Flussleiter 32 hat eine entsprechende Lasche 44, die sich in eine in der Leiterplatte 28 unterhalb des Magnetsensors 27 ausgebildete Aussparung axial hinein erstreckt, um eine zuverlässige Übertragung des magnetischen Flusses zu gewährleisten. Somit ist auch die Lasche 44 des ersten Flussleiters 32 in axialer Überlappung mit dem Magnetsensor 27 angeordnet, so dass der Magnetsensor 27 axial zwischen den beiden Laschen 44 angeordnet ist.

Im Beispiel gemäß Fig. 4 kann der einzige Magnetsensor 27 als einfacher oder aber als dualer Sensor ausgeführt sein. Bei einem dualen Magnetsensor sind dabei in ein einziges SMD-Bauelement insgesamt zwei Sensorelemente integriert, welche zur separaten Erfassung des magnetischen Flusses ausgebildet sind und separat voneinander Sensorsignale bereitstellen.

Im Ausführungsbeispiel gemäß Fig. 5 weist der Flussleiter 33 insgesamt zwei Laschen 44a, 44b, die über jeweilige Stege 43a, 43b mit dem Empfangsbereich 42 verbunden sind. Die Durchgangsöffnungen 35 sind nun zwischen den Stegen 43a, 43b ausgebildet. Die beiden Laschen 44a, 44b liegen dabei in einer gemeinsamen Ebene und erstrecken sich parallel zum Empfangsbereich 42. Jede Lasche 44a, 44b ist in axialer Überdeckung mit einem separaten Magnetsensor 27a, 27b angeordnet, welche beide an der Leiterplatte 28 als SMD-Bauelemente angebracht sind. Die Magnetsensoren 27a, 27b können einfache oder duale Sensoren sein.

Im Ausführungsbeispiel gemäß Fig. 5 hat auch der erste Flussleiter 32 entsprechend zwei separate Laschen, welche in axialer Überlappung mit den jeweiligen Magnetsensoren 27a, 27b angeordnet sind und hierbei z.B. in jeweiligen Aussparungen in der Leiterplatte 28 liegen.

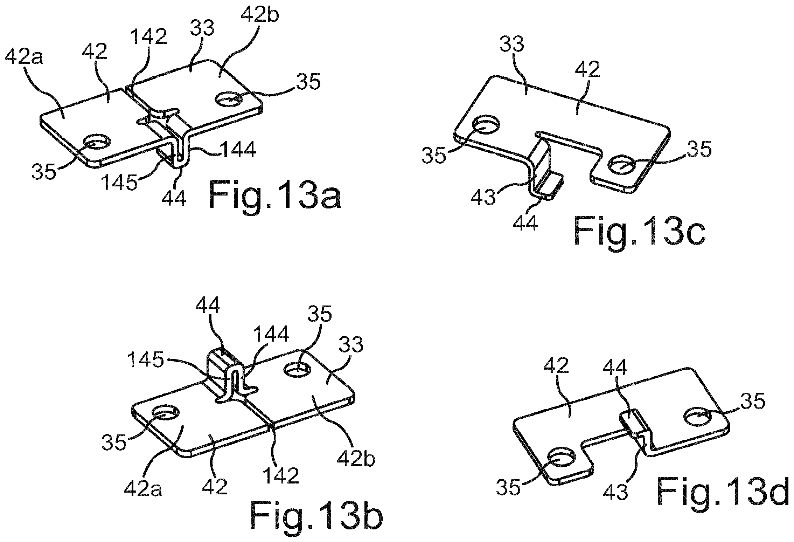

Zwei weitere Beispiele von Flussleitern 33 sind in den Figuren 13a bis 13d dargestellt. Der Flussleiter 33 gemäß Fig. 13a und 13b hat ebenfalls eine Lasche 44, die jedoch im Wesentlichen axial orientiert ist und in axialer Richtung zeigt. Diese Lasche 44 ist dadurch gebildet, dass etwa in der Mitte des Empfangsbereichs 42 ein Schlitz 142 ausgebildet ist, der den Empfangsbereich 42 in zwei Teile 42a, 42b unterteilt. Von jedem Teil 42a, 42b steht dabei ein axialer Fortsatz 144, 145 senkrecht ab, wobei die Fortsätze 144, 145 an ihren Enden zusammengeführt sind und somit insgesamt die axiale Lasche 44 bilden. Die Spitze dieser Lasche 44 liegt dann in axialer Überlappung mit dem Magnetsensor 27.

Ein weiteres Beispiel ist in den Figuren 13c und 13d dargestellt. Dieser Flussleiter 33 entspricht im Wesentlichen dem gemäß Fig. 4, wobei sich die Lasche 44 nunmehr in tangentialer Richtung erstreckt. Sie ist über den Steg 43 mit dem Empfangsbereich 42 verbunden. Lediglich die Orientierung des Stegs 43 und somit der Lasche 44 unterscheidet sich somit von der Ausführungsform gemäß Fig. 4.

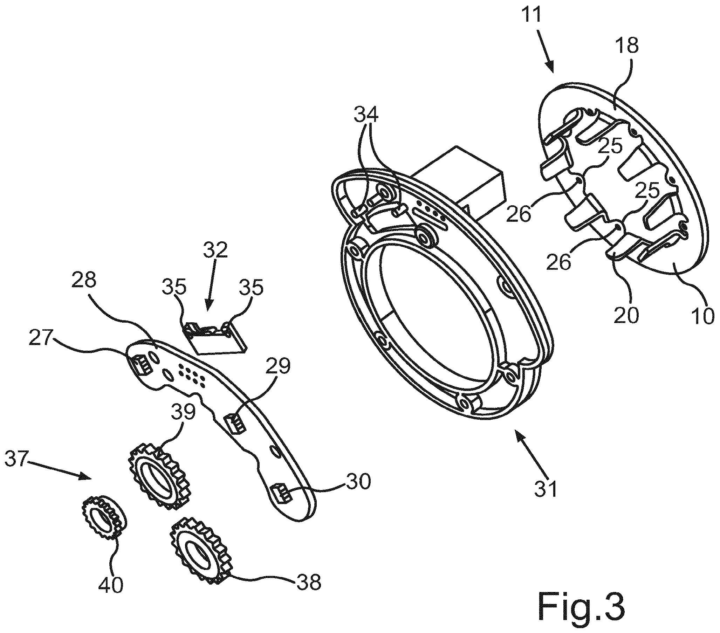

Mit erneutem Bezug auf die Fig. 1 bis 3 weist das Gehäuse 12 Stifte bzw. Zapfen 45 auf, welche in korrespondierende Durchgangsöffnungen 46 des Deckels 31 aufgenommen werden können. Die Befestigung des Deckels 31 am Gehäuse 12 erfolgt dann durch Umformen der Stifte 45 zu Nietköpfen.

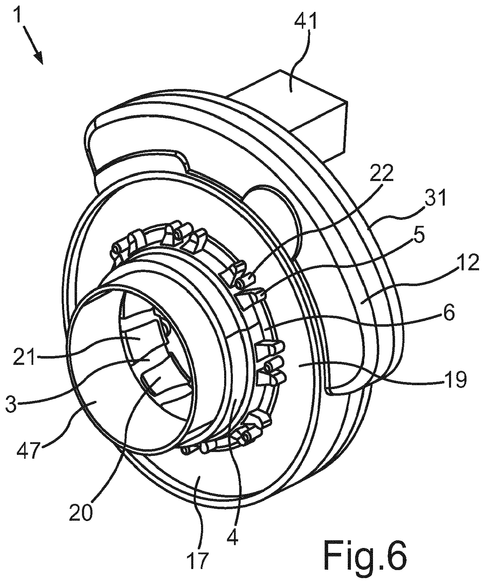

Die Vorrichtung 1 ist im zusammengebauten Zustand in Fig. 6 dargestellt. Zu erkennen ist der zweite axiale Bereich 4 des Halters 2, der aus dem Gehäuse 12 axial herausragt. An diesen Bereich 4 schließt sich in axialer Richtung unmittelbar die Hülse 47 an, über welche der Halter 2 mit dem zugeordneten Wellenteil verbunden wird. In Fig. 6 ist außerdem das Statorteil 17 mit seinem Randelement 19 dargestellt, welches über die Stifte 22 am Halter 2 befestigt ist. Im Inneren des Gehäuses 12 und somit nicht dargestellt sind die Flussleiter 32, 33 sowie die Leiterplatte 28 mit den Bauelementen 27, 29, 30 und das Getriebe 37. Das Gehäuse 12 wird zusammen mit dem Deckel 31 an einem Fahrzeugteil befestigt und die Vorrichtung 1 wird über den Stecker 41 elektrisch angeschlossen. Das Gehäuse 12 ist somit gegenüber der Lenkwelle fixiert. Der Halter 2 mit den Statorteilen 10, 17 kann dabei relativ zum Gehäuse 12 und zu den Flussleitern 32, 33 gedreht werden, nämlich zusammen mit der Lenkwelle. In Fig. 6 sind außerdem die jeweiligen Zahnelemente 20, 21 der beiderseitigen Statorteile 10, 17 zu erkennen. Diese Zahnelemente 20, 21 können beispielsweise in Vertiefungen angeordnet sein, welche an dem inneren Umfang des ersten axialen Bereiches 3 des Halters 2 ausgebildet sind.

Die Aufnahme 36 für das Getriebe 37 ist auf der gleichen axialen Höhe wie die Hülse 13 ausgebildet und radial zur Hülse 13 versetzt angeordnet. Im zusammengebauten Zustand befindet sich die Leiterplatte 28 axial zwischen den jeweiligen Randelementen 18, 19 der Statorteile 10, 17. Für die axiale Anordnung der Bauelemente 27, 29, 30 können nun unterschiedliche Ausführungsformen vorgesehen sein:

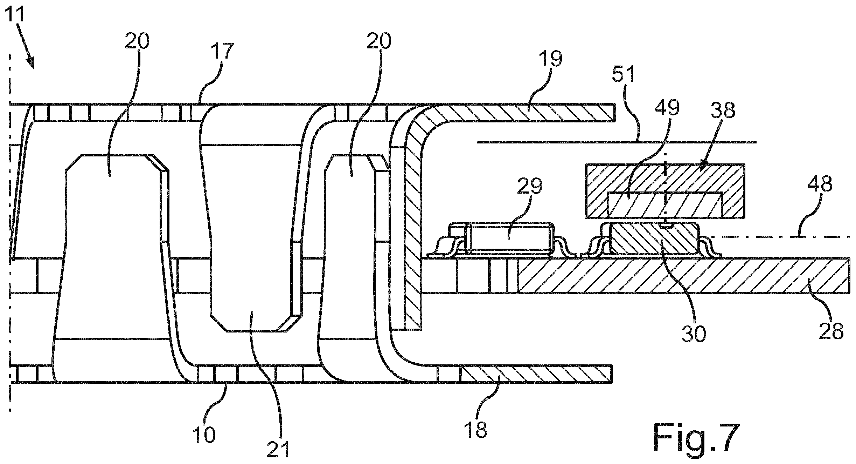

Gemäß einer ersten Variante können die Bauelemente 27, 29, 30 in axialer Richtung mittig zwischen den Randelementen 18, 19 angeordnet sein. Eine solche Anordnung ist in Fig. 7 gezeigt, welche eine teilweise Schnittdarstellung durch die Leiterplatte 28 und den Magnetfelddetektor 30 veranschaulicht. Perspektivisch dargestellt sind die beiden Statorteile 10, 17 mit dem jeweiligen Randelement 17, 18. Die Zahnelemente 20 greifen zwischen die Zahnelemente 21. Eine genau axial mittig zwischen den Randelementen 17, 18 verlaufende Mittelebene ist mit 48 bezeichnet, welche eine Symmetrieebene des Stators 11 darstellt. Die Bauelemente 27, 29, 30 liegen bei diesem Ausführungsbeispiel axial mittig in der Symmetrieebene bzw. Mittelebene 48. Zwangsläufig sind somit die Zahnräder 38, 39, 40 axial bezüglich der Mittelebene 48 versetzt und somit asymmetrisch angeordnet. Dies ist in Fig. 7 anhand des Zahnrades 38 mit seinem Permanentmagneten (49) gezeigt.

Im Beispiel gemäß Fig. 7 sind die beiden Flussleiter 32, 33 spiegelsymmetrisch bezüglich der Mittelebene 48 angeordnet. Die jeweiligen Empfangsbereiche 42 der Flussleiter 32, 33 können - je nach Länge des Stegs 43 - entweder axial innerhalb des Stators 11 und somit axial zwischen den Randelementen 18, 19 oder aber axial außerhalb des Stators 11 liegen. Die Permanentmagnete 49 der Zahnräder 38, 40 können derart oberflächenmagnetisiert werden, dass das Magnetfeld auf der axialen Höhe der beiden Randelemente 18, 19 gleich groß ist und sich somit gegenseitig aufhebt. Somit wird ein Übersprechen zwischen den beiden Sensorarten verhindert. Die Zahnräder 38, 39, 40 können optional auch in radialer Richtung ein wenig weiter nach außen gebracht werden, um das Übersprechen weiterhin zu reduzieren.

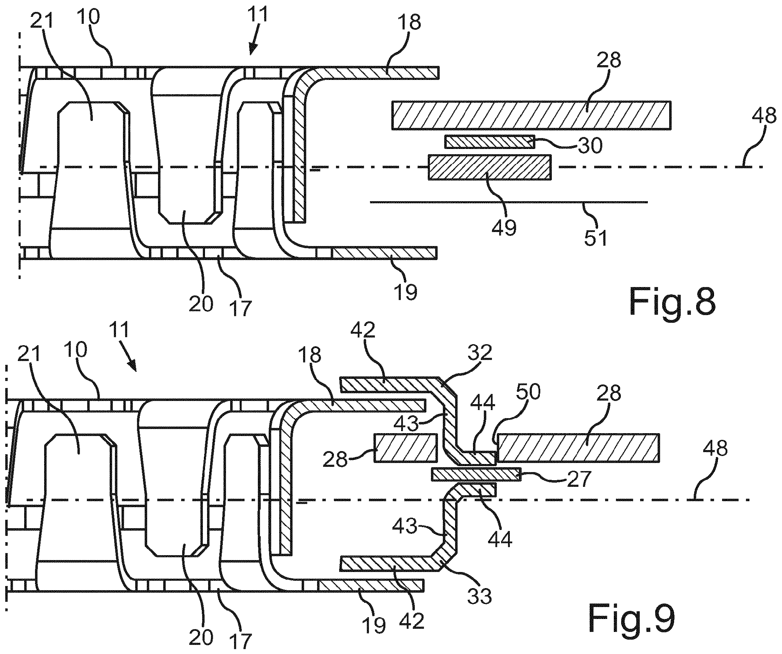

Gemäß einer zweiten Variante können die Bauelemente 27, 29, 30 in axialer Richtung außermittig zwischen den Randelementen 18, 19 angeordnet sein, und die Permanentmagnete 49 der Zahnräder 38, 40 können axial mittig zwischen den Randelementen 38, 40 liegen. Dann entspricht der axiale Abstand zwischen den Permanentmagneten und dem Randelement 38 dem axialen Abstand zwischen den Permanentmagneten und dem anderen Randelement 40. Eine solche Anordnung der Leiterplatte 28 und des Getriebes 37 ist in den Figuren 8 und 9 dargestellt. Während in Fig. 8 eine Schnittdarstellung durch die Leiterplatte 28 an der Stelle des Magnetdetektors 30 gezeigt ist, zeigt Fig. 9 eine Schnittdarstellung durch die Leiterplatte 28 auf der Höhe des Magnetsensors 27. Der Stator 11 ist jeweils perspektivisch dargestellt. Wie aus Fig. 8 hervorgeht, liegt der Permanentmagnet 49 genau in der Mittelebene 48. Auch bei einem herkömmlichen und nicht speziell oberflächenmagnetisierten Magneten 49 ergibt sich somit im Wesentlichen das gleiche Magnetfeld an den jeweiligen Randelementen 18, 19.

Gemäß Fig. 9 sind die beiden Flussleiter 32, 33 asymmetrisch bezüglich der Mittelachse 48 angeordnet. Der Empfangsbereich 42 eines der Flussleiter 32, 33 liegt dabei axial außerhalb des Stators 11 bzw. axial versetzt zum Stator 11, während der Empfangsbereich 42 des anderen Flussleiters 32, 33 axial innerhalb des Stators 11 liegt. In Fig. 9 ist außerdem die durchgängige Aussparung 50 in der Leiterplatte 28 unterhalb des Magnetsensors 27 zu sehen. Innerhalb dieser Aussparung 50 ist die Lasche 44 des Flussleiters 32 angeordnet, der auf der Rückseite der Leiterplatte 28 angeordnet ist. Der Magnetsensor 27 ist somit sehr dicht durch die Laschen 44 der Flussleiter 32, 33 in sandwichbauweise umgibt bzw. liegt axial zwischen den beiden Laschen 44.

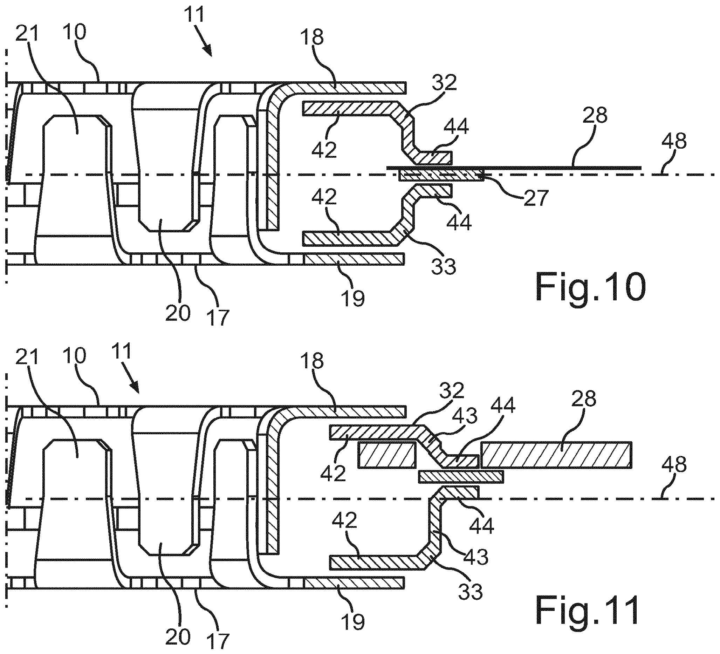

Gemäß Fig. 10 wird eine Flex-Leiterplatte 28 eingesetzt, d.h. eine Leiterplatte 28 in Form einer dünnen Folie, deren Dicke bevorzugt kleiner als 0,2 mm ist. Wie aus Fig. 10 hervorgeht, kann hier auf eine Aussparung unter dem Magnetsensor 27 verzichtet werden, weil der magnetische Fluss durch die Folie hindurch übertragen werden kann. Die beiden Flussleiter 32, 33 sind spiegelsymmetrisch bezüglich der Mittelebene 48 angeordnet. Die jeweiligen Empfangsbereiche 42 der Flussleiter 32, 33 sind hier axial innerhalb des Stators 11 und somit axial zwischen den Randelementen 18, 19 angeordnet, sodass die beiden Flussleiter 32, 33 vollständig axial wischen den Randelementen 18, 19 liegen.

Ein weiteres Beispiel ist in Fig. 11 dargestellt. Diese Anordnung entspricht im Wesentlichen der gemäß Fig. 9, jedoch mit dem Unterschied, dass die Flussleiter 32, 33 asymmetrisch ausgebildet sind und beide Flussleiter 32, 33 axial innerhalb des Stators 11 und somit axial zwischen den Randelementen 18, 19 angeordnet sind. Dies wird dadurch ermöglicht, dass der Flussleiter 32 mit einem kürzeren Steg 43 ausgebildet wird als der Flussleiter 33. Somit wird die axiale Bauhöhe weiterhin reduziert.

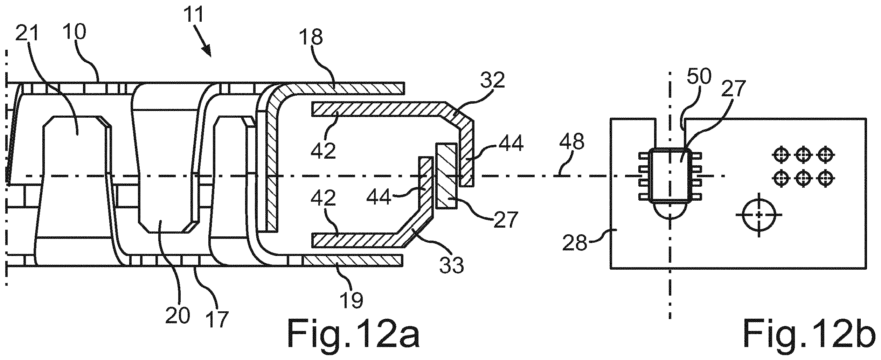

Ein noch weiteres Beispiel ist in den Figuren 12a und 12b dargestellt. Hier erstreckt sich die Leiterplatte 28 in axialer Richtung und ist somit parallel zur axialen Achse angeordnet. Entsprechend erstreckt sich auch der Magnetsensor 27 entlang der axialen Richtung, sodass eine gegenseitige Überlappung zwischen dem Magnetsensor 27 und den Laschen 44 in radialer Richtung gegeben ist. Dazu erstrecken sich die Laschen 44 nunmehr in axialer Richtung und somit parallel zur Leiterplatte 28. Sie können beispielsweise direkt von dem jeweiligen Empfangsbereich 42 senkrecht in Richtung zu dem jeweils anderen Flussleiter 32, 33 abstehen. Beide Flussleiter 32, 33 sind axial innerhalb des Stators 11 und somit axial zwischen den Randelementen 18, 19 angeordnet, sind jedoch asymmetrisch ausgebildet. Auch hier ist in der Leiterplatte 28 eine Aussparung 50 bereitgestellt, die sich nunmehr bis zur Kante der Leiterplatte 28 erstreckt und somit eine Einbuchtung bildet. In diese erstreckt sich dabei der Empfangsbereich 42 des Flussleiters 32 axial hinein, um die Lasche 44 dieses Flussleiters 32 auf der Rückseite des Magnetsensors 27 anordnen zu können. Das Beispiel gemäß den Figuren 12a und 12b erweist sich insbesondere bei einem reinen Drehmomentsensors als vorteilhaft, wenn auf die Lenkwinkelsensoreinrichtung verzichtet wird. Dann kann durch Geometrierestriktionen des Lenkungsgehäuses eine axiale Anordnung der Leiterplatte vorteilhaft sein. Es werden hier also zwei unterschiedlich geformte Flussleiter 32, 33 eingesetzt, um den Magnetfeldsensor 27 sowohl von der radialen Außen- als auch von der radialen Innenseite aus zu erreichen. Auch hier kann anstatt einer Standard-Leiterplatte 28 mit Aussparung 50 eine dünne Flex-Leiterplatte verwendet werden.

Bei allen Varianten kann axial zwischen den Permanentmagneten 49 der Zahnräder 38, 40 einerseits und zumindest einem der Randelemente 18, 19 andererseits optional auch eine metallische Abschirmung 51, insbesondere eine blechartige Abschirmung, bereitgestellt werden. In den Figuren 7 und 8 ist eine solche Abschirmung 51 auf der Rückseite der Leiterplatte 28 angeordnet und erstreckt sich parallel zur Mittelebene 48. Eine Abschirmung 51 kann jedoch auch ergänzend oder alternativ auf der anderen Seite der Leiterplatte 28 vorgesehen sein. Gegebenenfalls kann die Abschirmung 51 auch als eine Metallisierung der Leiterplatte 28 direkt an ihrer Rückseite oder Frontseite ausgebildet sein. Es können z.B. auf beiden axialen Seiten der Zahnräder 38, 39, 40 jeweilige Abschirmbleche vorgesehen werden, welche das Übersprechen zwischen den zwei Sensorarten über den Stator 11 verhindern. Die Permanentmagnete 49 können dabei diametral magnetisiert werden.

## Patentansprüche

1. Vorrichtung (1) für ein Kraftfahrzeug, mit einer Drehmomentsensoreinrichtung zur Erfassung eines auf eine Lenkwelle des Kraftfahrzeugs aufgebrachten Drehmoments, und mit einer Lenkwinkelsensoreinrichtung zur Erfassung eines aktuellen Lenkwinkels der Lenkwelle, wobei die Drehmomentsensoreinrichtung einen magnetischen Stator (11) aufweist, der zum Leiten von magnetischem Fluss von einem Magneten hin zu zumindest einem Flussleiter (32, 33) und hierdurch zu zumindest einem Magnetsensor (27) der Drehmomentsensoreinrichtung ausgebildet ist und zwei in axialer Richtung versetzt zueinander angeordnete Statorteile (10, 17) aufweist, welche jeweils ein sich in radialer Richtung erstreckendes, ringförmiges Randelement (18, 19) aufweisen, und wobei die Lenkwinkelsensoreinrichtung zumindest ein Drehübertragungselement (38, 39, 40) mit einem Permanentmagneten (49) und einen Magnetfelddetektor (29, 30) zur Erfassung einer Drehbewegung des Drehübertragungselements (38, 39, 40) aufweist,
wobei das zumindest eine Drehübertragungselement (38, 39, 40) mit dem Permanentmagneten (49) in axialer Richtung zwischen den Randelementen (18, 19) angeordnet ist und wobei die Lenkwinkelsensoreinrichtung einen Rotor (15) mit einer Zahnstruktur (16) aufweist und das Drehübertragungselement (38, 39, 40) als Zahnrad ausgebildet ist, das in Eingriff mit der Zahnstruktur (16) des Rotors (15) bringbar ist und mittels welchem eine Drehbewegung des Rotors (15) in eine Drehbewegung des Permanentmagneten (49) übertragbar ist,
**dadurch gekennzeichnet, dass**
die Lenkwinkelsensoreinrichtung ein Zahnradgetriebe (37) mit wenigstens zwei Zahnrädern (38, 39) umfasst, deren Zähne in jene des Rotors (15) greifen und auf diese Weise mit dem Rotor (15) gekoppelt sind, wobei in einem Zahnrad (38) ein Permanentmagnet angeordnet ist und die Rotationsachse des Zahnrads (38) parallel zur Drehachse der Lenkwelle ist,
- wobei das andere Zahnrad (39) als Zwischenzahnrad mit einem Antriebszahnrad (40) drehbar gekoppelt ist und das Antriebszahnrad (40) einen weiteren Permanentmagneten aufweist und die Zahnräder (38, 39, 40) in einer Aufnahme (36) eines Gehäuses (12) drehbar gelagert sind, wobei in der Aufnahme (36) eine Innenverzahnung vorhanden ist, an der das Antriebszahnrad (40) entlang einer Zykloide abrollen kann, wobei die Bohrung des Zahnrads (39) hierzu exzentrisch ausgebildet ist,
- oder wobei die beiden Zahnräder (38, 39) jeweils einen Permanentmagneten und eine unterschiedliche Anzahl von Zähnen aufweisen, so dass der Lenkwinkel bestimmbar ist.

2. Vorrichtung (1) nach Anspruch 1,
**dadurch gekennzeichnet, dass**
zumindest ein Drehübertragungselement (38, 39, 40) mit seinem Permanentmagneten (49) zumindest bereichsweise in gegenseitiger axialer Überdeckung mit den Randelementen (18, 19) angeordnet ist.

3. Vorrichtung (1) nach Anspruch 1 oder 2,
**dadurch gekennzeichnet, dass**
zumindest ein Drehübertragungselement (38, 39, 40) mit seinem Permanentmagneten (49) in radialer Richtung versetzt zu den Randelementen (18, 19) angeordnet ist.

4. Vorrichtung (1) nach einem der vorhergehenden Ansprüche,
**dadurch gekennzeichnet, dass**
der Magnetfelddetektor (29, 30) an einer Leiterplatte (28) angeordnet ist, welche axial zwischen den Randelementen (18, 19) angeordnet ist.

5. Vorrichtung (1) nach einem der vorhergehenden Ansprüche,
**dadurch gekennzeichnet, dass**
der Permanentmagnet (49) in axialer Richtung außermittig zwischen den Randelementen (18, 19) der Statorteile (10, 17) angeordnet ist, und insbesondere dazu ausgebildet ist, an den jeweiligen Randelementen (18, 19) der Statorteile (10, 17) ein Magnetfeld mit gleicher Feldstärke bereitzustellen.

6. Vorrichtung (1) nach einem der Ansprüche 1 bis 4,
**dadurch gekennzeichnet, dass**
der Permanentmagnet (49) in axialer Richtung mittig zwischen den Randelementen (18, 19) der Statorteile (10, 17) angeordnet ist, und dass der zumindest eine Magnetsensor (27) axial außermittig zwischen den Randelementen (18, 19) angeordnet ist.

7. Vorrichtung (1) nach einem der vorhergehenden Ansprüche,
**dadurch gekennzeichnet, dass**
axial zwischen dem Permanentmagneten (49) einerseits und zumindest einem der Randelemente (18, 19) andererseits eine Abschirmung (51) für Magnetfelder angeordnet ist.

8. Vorrichtung (1) nach einem der vorhergehenden Ansprüche,
**dadurch gekennzeichnet, dass**
der Rotor (15) mit seiner Zahnstruktur (16) an einen Halter (2) angespritzt ist, an welchem der Stator (11) angeordnet ist.

9. Vorrichtung (1) nach einem der vorhergehenden Ansprüche,
**dadurch gekennzeichnet, dass**
der zumindest eine Magnetsensor (27) als SMD-Bauelement ausgebildet ist, das an einer Leiterplatte (28), insbesondere einer für die Drehmomentsensoreinrichtung und die Lenkwinkelsensoreinrichtung gemeinsamen Leiterplatte (28) angeordnet ist, wobei der zumindest eine Flussleiter (32, 33) eine Lasche (44) aufweist, die in gegenseitiger Überlappung mit dem Magnetsensor (27) angeordnet ist.

10. Vorrichtung (1) nach Anspruch 9,
**dadurch gekennzeichnet, dass**
die Lasche (44) in gegenseitiger axialer Überlappung mit dem Magnetsensor (27) angeordnet ist.

11. Vorrichtung (1) nach Anspruch 9 oder 10,
**dadurch gekennzeichnet, dass**
der zumindest eine Flussleiter (32, 33) einen in gegenseitiger axialer Überlappung mit dem Stator (11) angeordneten, plattenförmigen Empfangsbereich (42) zum Empfangen des magnetischen Flusses von dem Stator (11) aufweist, und dass die sich parallel zum Empfangsbereich (42) erstreckende Lasche (44) in axialer Richtung versetzt zum Empfangsbereich (42) angeordnet ist.

12. Vorrichtung (1) nach einem der Ansprüche 9 bis 11,
**dadurch gekennzeichnet, dass**
die Vorrichtung (1) zwei Flussleiter (32, 33) mit jeweils zumindest einer Lasche (44) aufweist, die auf einander gegenüberliegenden Seiten der Leiterplatte (28) angeordnet sind, wobei die jeweiligen Laschen (44), insbesondere in axialer Richtung, in gegenseitiger Überlappung mit dem Magnetsensor (27) angeordnet sind.

13. Vorrichtung (1) nach Anspruch 12,
**dadurch gekennzeichnet, dass**
die Leiterplatte (28) eine unter dem Magnetsensor (27) ausgebildete Aussparung (50) für die Lasche (44) eines der Flussleiter (32, 33) aufweist.

14. Vorrichtung (1) nach Anspruch 12,
**dadurch gekennzeichnet, dass**
zumindest im Bereich des Magnetsensors (27) die Leiterplatte (28) in Form einer Folie ausgebildet ist.

15. Kraftfahrzeug mit einer Vorrichtung (1) nach einem der vorhergehenden Ansprüche.

## Claims

1. Device (1) for a motor vehicle, with a torque sensor device for detecting a torque applied to a steering shaft of the motor vehicle, and with a steering angle sensor device for detecting a current steering angle of the steering shaft, wherein the torque sensor device comprises a magnetic stator (11) that is designed to conduct magnetic flux from a magnet to at least one flux conductor (32, 33) and through the same to at least one magnetic sensor (27) of the torque sensor device and two stator parts (10, 17) that are disposed so as to be displaced relative to each other in the axial direction, each of which comprises an annular edge element (18, 19) extending in the radial direction, and wherein the steering angle sensor device comprises at least one rotation transmission element (38, 39, 40) with a permanent magnet (49) and a magnetic field detector (29, 30) for detecting a rotary motion of the rotation transmission element (38, 39, 40), wherein the at least one rotation transmission element (38, 39, 40) with the permanent magnet (49) is disposed between the edge elements (18, 19) in the axial direction and wherein the steering angle sensor device comprises a rotor (15) with a tooth structure (16) and the rotation transmission element (38, 39, 40) is in the form of a gear wheel, which can be brought into engagement with the tooth structure (16) of the rotor (15) and by means of which a rotary motion of the rotor (15) can be transferred into a rotary motion of the permanent magnet (49),
**characterized in that**
the steering angle sensor device comprises a gear wheel transmission (37) with at least two gear wheels (38, 39), whose teeth engage in those of the rotor (15) and in this way are coupled to the rotor (15), wherein a permanent magnet is disposed in the gear wheel (38), and the axis of rotation of the gear wheel (38) is parallel to the axis of rotation of the steering shaft
- wherein the other gear wheel (39) is rotatably coupled as an intermediate gear wheel to a drive gear wheel (40) and the drive gear wheel (40) comprises a further permanent magnet and the gear wheels (38, 39, 40) are rotatably mounted in an accommodation means (36) of a housing (12), wherein in the accommodation means (36) there is an inner toothing, on which the drive gear wheel (40) can roll along a cycloid, wherein the bore of the gear wheel (39) is of an eccentric form for this purpose,
- or wherein the two gear wheels (38, 39) each comprise a permanent magnet and different numbers of teeth, so that the steering angle is determinable.

2. Device (1) according to Claim 1,
**characterized in that**
at least one rotation transmission element (38, 39, 40) with its permanent magnet (49) is disposed so as to be at least partially in mutual axial overlap with the edge elements (18, 19).

3. Device (1) according to Claim 1 or 2,
**characterized in that**
at least one rotation transmission element (38, 39, 40) with its permanent magnet (49) is disposed so as to be displaced in the radial direction relative to the edge elements (18, 19).

4. Device (1) according to any one of the preceding claims,
**characterized in that**
the magnetic field detector (29, 30) is disposed on a circuit board (28) that is disposed axially between the edge elements (18, 19).

5. Device (1) according to any one of the preceding claims,
**characterized in that**
the permanent magnet (49) is disposed in the axial direction off-centre between the edge elements (18, 19) of the stator parts (10, 17), and in particular is designed to provide a magnetic field with the same field strength at the respective edge elements (18, 19) of the stator parts (10, 17).

6. Device (1) according to any one of Claims 1 to 4,
**characterized in that**
the permanent magnet (49) is disposed centrally between the edge elements (18, 19) of the stator parts (10, 17) in the axial direction, and that the at least one magnetic sensor (27) is disposed axially off-centre between the edge elements (18, 19) .

7. Device (1) according to any one of the preceding claims,
**characterized in that**
a screening means (51) for magnetic fields is disposed axially between the permanent magnet (49) on the one hand and at least one of the edge elements (18, 19) on the other hand.

8. Device (1) according to any one of the preceding claims,
**characterized in that**
the rotor (15) with its tooth structure (16) is moulded onto a holder (2) on which the stator (11) is disposed.

9. Device (1) according to any one of the preceding claims,
**characterized in that**
the at least one magnetic sensor (27) is in the form of an SMD component that is disposed on a circuit board (28), in particular a common circuit board (28) for the torque sensor device and the steering angle sensor device, wherein the at least one flux conductor (32, 33) comprises a tab (44) that is disposed so as to be in mutual overlap with the magnetic sensor (27).

10. Device (1) according to Claim 9,
**characterized in that**
the tab (44) is disposed so as to be in mutual axial overlap with the magnetic sensor (27).

11. Device (1) according to Claim 9 or 10,
**characterized in that**
the at least one flux conductor (32, 33) comprises a plate-shaped receiving region (42) for receiving the magnetic flux from the stator (11), said region (42) being disposed so as to be in mutual axial overlap with the stator (11), and that the tab (44) extending parallel to the receiving region (42) is disposed so as to be displaced in the axial direction relative to the receiving region (42).

12. Device (1) according to any one of Claims 9 to 11,
**characterized in that**
the device (1) comprises two flux conductor (32, 33), each with at least one tab (44), which are disposed on mutually opposite sides of the circuit board (28), wherein the respective tabs (44) are disposed so as to be in mutual overlap with the magnetic sensor (27), in particular in the axial direction.

13. Device (1) according to Claim 12,
**characterized in that**
the circuit board (28) comprises a cut-out (50) for the tab (44) of one of the flux conductors (32, 33), the cut-out being formed beneath the magnetic sensor (27).

14. Device (1) according to Claim 12,
**characterized in that**
the circuit board (28) is in the form of a film at least in the region of the magnetic sensor (27).

15. Motor vehicle with a device (1) according to any one of the preceding claims.

## Revendications

1. Dispositif (1) destiné à un véhicule automobile, ledit dispositif comprenant un équipement détecteur de couple de rotation destiné à détecter un couple de rotation appliqué à un arbre de direction du véhicule automobile, et un équipement détecteur d'angle de braquage destiné à détecter un angle de braquage actuel de l'arbre de direction, l'équipement détecteur de couple de rotation comportant un stator magnétique (11) qui est conçu pour guider un flux magnétique d'un aimant en direction d'au moins un conducteur de flux (32, 33) et ainsi en direction d'au moins un capteur magnétique (27) de l'équipement détecteur de couple de rotation, et comportant deux parties de stator (10, 17) qui sont disposées de manière décalée l'une par rapport à l'autre dans la direction axiale et qui comportent chacune un élément périphérique (18, 19) annulaire qui s'étend dans une direction radiale, et l'équipement détecteur d'angle de braquage comportant au moins un élément de transmission de rotation (38, 39, 40) doté d'un aimant permanent (49) et un détecteur de champ magnétique (29, 30) destiné à détecter un mouvement de rotation de l'élément de transmission de rotation (38, 39, 40), l'au moins un élément de transmission de rotation (38, 39, 40) doté de l'aimant permanent (49) étant disposé dans la direction axiale entre les éléments périphériques (18, 19) et l'équipement détecteur d'angle de braquage comportant un rotor (15) doté d'une structure dentée (16) et l'élément de transmission de rotation (38, 39, 40) étant réalisé sous la forme d'une roue dentée qui peut être amenée en engrènement avec la structure dentée (16) du rotor (15) et au moyen de laquelle un mouvement de rotation du rotor (15) peut être converti en un mouvement de rotation de l'aimant permanent (49),
**caractérisé en ce que**
l'équipement détecteur d'angle de braquage comprend une transmission par roues dentées (37) dotée d'au moins deux roues dentées (38, 39) dont les dents s'engrènent dans celles du rotor (15) et sont ainsi accouplées au rotor (15), un aimant permanent étant disposé dans une roue dentée (38) et l'axe de rotation de la roue dentée (38) étant parallèle à l'axe de rotation de l'arbre de direction,
- l'autre roue dentée (39) étant accouplée en rotation en tant que roue dentée intermédiaire à une roue dentée d'entraînement (40) et la roue dentée d'entraînement (40) comportant un autre aimant permanent et les roues dentées (38, 39, 40) étant montées à rotation dans un logement (36) d'un boîtier (12), une denture intérieure sur laquelle la roue dentée d'entraînement (40) peut rouler suivant une cycloïde étant présente dans le logement (36), l'alésage de la roue dentée (39) étant pour cela excentré,
- ou les deux roues dentées (38, 39) comportant chacune un aimant permanent et un nombre de dents différent de façon à pouvoir déterminer l'angle de braquage.

2. Dispositif (1) selon la revendication 1,
**caractérisé en ce que**
au moins un élément de transmission de rotation (38, 39, 40) doté de son aimant permanent (49) est disposé au moins par endroits en superposition axiale mutuelle avec les éléments périphériques (18, 19).

3. Dispositif (1) selon la revendication 1 ou 2,
**caractérisé en ce que**
au moins un élément de transmission de rotation (38, 39, 40) doté de son aimant permanent (49) est décalé dans une direction radiale par rapport aux éléments périphériques (18, 19).

4. Dispositif (1) selon l'une des revendications précédentes,
**caractérisé en ce que**
le détecteur de champ magnétique (29, 30) est disposé sur une carte de circuit imprimé (28) qui est disposée axialement entre les éléments périphériques (18, 19).

5. Dispositif (1) selon l'une des revendications précédentes,
**caractérisé en ce que**
l'aimant permanent (49) est disposé de manière excentrée dans la direction axiale entre les éléments périphériques (18, 19) des parties de stator (10, 17) et **en ce qu'**il est notamment conçu pour fournir, au niveau des éléments périphériques (18, 19) respectifs des parties de stator (10, 17), des champs magnétiques ayant les mêmes intensités de champ.

6. Dispositif (1) selon l'une des revendications 1 à 4,
**caractérisé en ce que**
l'aimant permanent (49) est disposé de manière centrale dans la direction axiale entre les éléments périphériques (18, 19) des parties de stator (10, 17) et **en ce que** l'au moins un capteur magnétique (27) est disposé de manière excentrée axialement entre les éléments périphériques (18, 19).

7. Dispositif (1) selon l'une des revendications précédentes,
**caractérisé en ce que**
un blindage (51) contre les champs magnétiques est disposé axialement entre l'aimant permanent (49) d'une part et au moins un des éléments périphériques (18, 19) d'autre part.

8. Dispositif (1) selon l'une des revendications précédentes,
**caractérisé en ce que**
le rotor (15) doté de sa structure dentée (16) est moulé par injection sur un support (2) sur lequel le stator (11) est disposé.

9. Dispositif (1) selon l'une des revendications précédentes,
**caractérisé en ce que**
l'au moins un capteur magnétique (27) est réalisé sous la forme d'un composant SMD qui est disposé sur une carte de circuit imprimé (28), notamment sur une carte de circuit imprimé (28) commune à l'équipement capteur de couple de rotation et l'équipement capteur d'angle de braquage, l'au moins un conducteur de flux (32, 33) comportant une languette (44) qui est disposée en superposition mutuelle avec le capteur magnétique (27).

10. Dispositif (1) selon la revendication 9,
**caractérisé en ce que**
la languette (44) est disposée en superposition axiale mutuelle avec le capteur magnétique (27).

11. Dispositif (1) selon la revendication 9 ou 10,
**caractérisé en ce que** l'au moins un conducteur de flux (32, 33) comporte une zone de réception (42) en forme de plaque disposée en superposition axiale mutuelle avec le capteur (11) et destinée à recevoir le flux magnétique du stator (11), et **en ce que** la languette (44) s'étendant parallèlement à la zone de réception (42) est disposée de manière décalée dans la direction axiale par rapport à la zone de réception (42).

12. Dispositif (1) selon l'une des revendications 9 à 11,
**caractérisé en ce que**
le dispositif (1) comporte deux conducteurs de flux (32, 33) dotés chacun d'au moins une languette (44), lesquels conducteurs de flux sont disposés sur des côtés mutuellement opposés de la carte de circuit imprimé (28), les languettes respectives (44) étant disposées en superposition mutuelle avec le capteur magnétique (27), notamment dans la direction axiale.

13. Dispositif (1) selon la revendication 12,
**caractérisé en ce que**
la carte de circuit imprimé (28) comporte un évidement (50) réalisé au-dessous du capteur magnétique (27) et destiné à la languette (44) d'un des conducteurs de flux (32, 33).

14. Dispositif (1) selon la revendication 12,
**caractérisé en ce que**
la carte de circuit imprimé (28) est réalisée sous la forme d'un film dans au moins la zone du capteur magnétique (27).

15. Véhicule automobile comportant un dispositif (1) selon l'une des revendications précédentes.
